# EUROPEAN PATENT APPLICATION

(11) **EP 3 113 414 A1**
(43) Date of publication of application: **04.01.2017**
(21) Application number: 16174314.1
(22) Date of filing: 14.06.2016
(51) Int. Cl.: H04L 12/24, G06F 3/0486, G06F 3/0481

(54) **METHOD AND ASSOCIATED APPARATUS FOR APPLYING DEVICE MANAGEMENT RULES IN ROUTER**

(30) Priority: 29.06.2015 TW 104120912
(71) Applicant: Synology Incorporated, Taipei 103 (TW)
(72) Inventor: Chiang, Cheng-Han, 242 New Taipei City (TW); Lin, Tsen-En, 220 New Taipei City (TW)
(74) Representative: Becker Kurig Straus

(57) **Abstract**

A method (200) for applying device management rules in a router and associated apparatus (100) are provided, in which the method (200) includes: providing a user of the router with a drag-and-drop user interface, and outputting display data of a plurality of icons respectively with respect to a plurality of neighboring electronic devices, for displaying the plurality of icons on the drag-and-drop user interface to allow the user to drag and drop at least one icon of the plurality of icons ; and according to user inputs obtained via the drag-and-drop user interface, applying at least one device management rule of the device management rules to at least one neighboring electronic device within the plurality of neighboring electronic devices, in which the icon and the neighboring electronic device are related to each other. The plurality of neighboring electronic devices can be wirelessly connected to the router.

## Description

The present invention relates to wireless network management, and more particularly, to a method and apparatus for applying device management rules in a router.

Wireless network management of a router is performed by utilizing tables in a user interface (UI). A user may have to switch between the tables many times, manually input a source internet protocol (IP) address and a media access control (MAC) address in one of the tables, and select and set a connected apparatus by using a dropdown menu. This may introduce some issues. For example, the user may need to switch pages many times to finish the configuration setting of a connecting device, which requires more time. In another example, the user may have to click the dropdown menu many times to finish the settings. In another example, when the user interfaces are complicated, the user needs to spend time and effort to learn how to operate the user interface smoothly.

This in mind, the application aims at providing a method and apparatus in order to solve the abovementioned problems.

This is achieved by a method for applying device management rules in a router and associated device according to claims 1 and 6. The dependent claims pertain to corresponding further developments and improvements.

As will be seen more clearly from the detailed description following below, the claimed method includes: providing a drag-and-drop user interface (UI) for a user of the router, and outputting display data of a plurality of icons with respect to a plurality of electronic devices, respectively, for displaying the plurality of icons on the drag-and-drop UI, to allow the user to drag and drop at least one icon of the plurality of icons, in which the plurality of electronic devices are wirelessly connected or connected in a wired manner to the router; and according to user inputs obtained via the drag-and-drop UI, applying at least one device management rule of the device management rules to at least one electronic device within the plurality of electronic devices, in which the icon corresponds to the electronic device. The plurality of electronic devices may be wirelessly connected to the router, and the device management rules may include configuration settings for traffic control, quality of service (QoS), beamforming, and parental control.

In addition, the claimed apparatus includes at least one portion of the router, and also includes a control circuit. The control circuit is arranged to control operations of the router, in which the control circuit includes a user interface (UI) control module and a setting module. The UI control module is arranged to provide a drag-and-drop UI for a user of the router, and output display data of a plurality of icons with respect to a plurality of electronic devices, respectively, for displaying the plurality of icons on the drag-and-drop UI, to allow the user to drag and drop at least one icon of the plurality of icons, in which the plurality of electronic devices are wirelessly connected or connected in a wired manner to the router. The setting module is arranged to apply at least one device management rule of the device management rules to at least one electronic device within the plurality of electronic devices according to user inputs obtained via the drag-and-drop UI, in which the icon corresponds to the electronic device. The plurality of electronic devices may be wirelessly connected to the router, and the device management rules may include configuration settings for traffic-control, quality of service (QoS), beamforming, and parental-control.

In the following, the invention is further illustrated by way of example, taking reference to the accompanying drawings. Thereof:
Fig. 1 is a diagram illustrating an apparatus for applying device management rules in a router according to an embodiment of the present invention;
Fig. 2 is a flowchart illustrating a method for applying device management rules in a router according to an embodiment of the present invention;
Fig. 3 is a diagram illustrating a control scheme associated with the method shown in Fig. 2 according to an embodiment of the present invention;
Fig. 4 is a diagram illustrating a control scheme associated with the method shown in Fig. 2 according to another embodiment of the present invention;
Fig. 5 is a diagram illustrating a scenario of the embodiment of Fig. 4 when a drag-and-drop operation is not yet finished;
Fig. 6 is a diagram illustrating an icon associated with the method shown in Fig. 2 according to an embodiment of the present invention;
Fig. 7 is a diagram illustrating an icon associated with the method shown in Fig. 2 according to another embodiment of the present invention;
Fig. 8 is a diagram illustrating an icon associated with the method shown in Fig. 2 according to another embodiment of the present invention;
Fig. 9 is a diagram illustrating an icon associated with the method shown in Fig. 2 according to another embodiment of the present invention; and
Fig. 10 is a diagram illustrating an icon associated with the method shown in Fig. 2 according to another embodiment of the present invention.

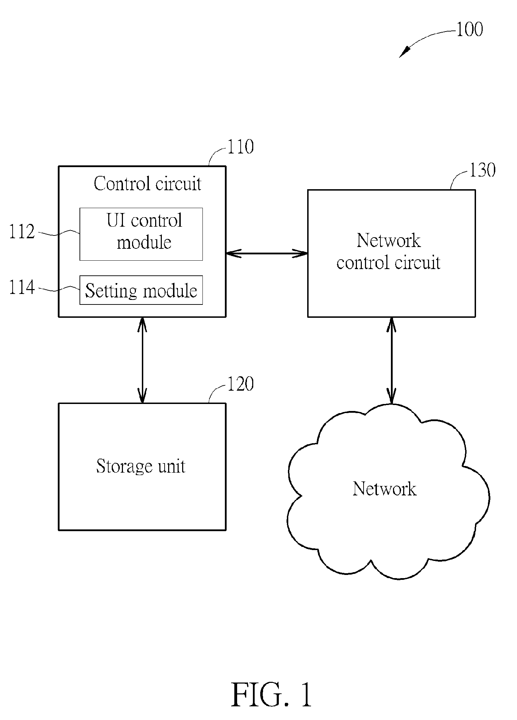

Fig. 1 is a diagram illustrating an apparatus for applying device management rules in a router according to an embodiment of the present invention, in which the apparatus 100 includes at least one portion (e.g. part or all) of the router. For example, the apparatus 100 may include one or more control circuits of the router, such as one or more integrated circuits (ICs). In another example, the apparatus 100 may be the whole router. In another example, the apparatus 100 may be a network system comprising the router. In yet another example, the apparatus 100 may be a server system, and the server system may include at least one server and the router.

According to this embodiment, the apparatus 100 may include a control circuit 110, a storage unit 120 and a network control circuit 130, in which the control circuit 110 is connected to the storage unit 120 and the network control circuit 130. The control circuit 110 may be arranged to control operations of the router, and the storage unit 120 may be arranged to store configuration information of the router. Further, the network control circuit 130 may provide network service for the control circuit 110, to allow the control circuit 110 to connect wirelessly or in a wired manner to at least one network via the network control circuit 130. The network control circuit 130 may be coupled to multiple network cable connectors of the router, and the network cable connectors may be connected to network cables, to allow the router to communicate with some electronic devices in the network system through the network cables. In another example, the network control circuit 130 may be electrically coupled to one or more antennas of the router, and the router may perform wireless communications through the one or more antennas. Further, since the control circuit 110 may control operations of the router, the control circuit 110 may be viewed as a main control circuit of the router. Under the control of the control circuit 110, the router may access network resources via the network control circuit 130, and may perform network management operations via the network control circuit 130.

In this embodiment, the control circuit 110 may include a user interface (UI) control module 112 and a setting module 114. The user interface control module 112 may be arranged to perform user interface control to assist the user to perform various configuration setting operations upon the router, and the setting module 114 may refer to a user indication to trigger a specific configuration setting operation of the configuration setting operations. For example, by updating the configuration information, the setting module 114 may apply at least one portion of the device management rules (e.g. one or more device management rules) to one or more electronic devices.

In practice, the control circuit 110 may be implemented as a processing circuit (such as a processor or a controller) of a set of program modules, in which the set of program modules may include the user interface control module 112 and the setting module 114. For example, the program module may include firmware codes. The program module may alternatively include software codes. In another example, any of the user interface control module 112 and the setting module 114 may be a sub-circuit of the control circuit 110, rather than any program module. In some embodiments, the processing circuit may be implemented with an application-specific integrated circuit (ASIC), in which the user interface control module 112 and the setting module 114 may be sub-circuits in the control circuit 110.

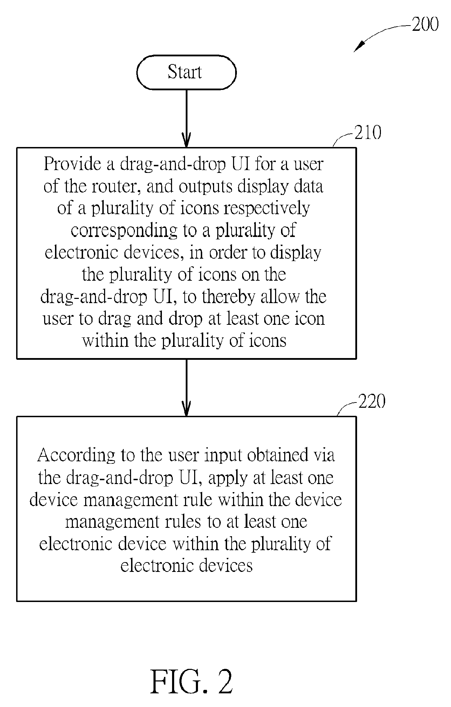

Fig. 2 is a flowchart illustrating a method 200 for applying device management rules in a router according to an embodiment of the present invention. The method may be applied to the apparatus 100 shown in Fig. 1, and more particularly, the aforementioned control circuit 110. The method is described as follows.

In Step 210, the user interface control module 112 provides a drag-and-drop UI for a user of the router, and outputs display data of a plurality of icons respectively with respect to a plurality of electronic devices, in order to display the plurality of icons on the drag-and-drop UI, to thereby allow the user to drag and drop at least one icon within the plurality of icons. For example, each electronic device within the plurality of electronic devices may be wirelessly connected to the router, in which each of the plurality of electronic devices may be viewed as an electronic device adjacent to the router. Any electronic device within the plurality of electronic devices may be wirelessly connected or be connected in a wired manner to the router.

In Step 220, according to the user input obtained via the drag-and-drop UI, the setting module 114 applies at least one device management rule within the device management rules. For example, the setting module 114 may apply one or more device management rules to at least one electronic device within the plurality of electronic devices, in which the icon corresponds to the electronic device. Examples of the device management rules may include (but are not limited to) configuration settings for the traffic-control, configuration settings for various levels of quality of service (QoS), configuration settings for beamforming, and configuration settings for parental-control.

According to some embodiments, each electronic device of the plurality of electronic devices may be wirelessly connected to the router. According to wireless signals of the plurality of electronic devices, the user interface control module 112 may determine distances between the plurality of electronic devices and the router, to generate display location information of each of the plurality of icons, in which the display location information of the plurality of icons is related to the distances. According to the display location information of the plurality of icons, the user interface control module 112 may control the displayed locations of the plurality of icons on the drag-and-drop UI, respectively.

For example, the plurality of electronic devices may include a first electronic device and a second electronic device, where a first distance between the first electronic device and the router is smaller than a second distance between the second electronic device and the router. The plurality of icons may include a first icon with respect to the first electronic device and a second icon with respect to the second electronic device. Furthermore, the user interface control module 112 may control locations of the first icon and the second icon with respect to a reference point in the drag-and-drop UI, to make the distance between the first icon and the reference point be smaller than the distance between the second icon and the reference point, to thereby indicate that the first distance is smaller than the second distance, in which in the drag-and-drop UI, the reference point is arranged to represent the location of the router.

According to some embodiments, the drag-and-drop UI may include a plurality of predetermined regions respectively with respect to a plurality of control entries, and the plurality of predetermined regions are arranged to trigger the plurality of control entries, respectively. As mentioned in Step 220, when the user inputs indicate that the user has dragged and dropped the icon to at least one predetermined region of the plurality of predetermined regions, the setting module 114 may trigger at least one control entry of the plurality of control entries to apply the device management rule to the electronic device, in which the predetermined region is related to the control entry.

The plurality of control entries may include: a beamforming control entry, for performing beamforming control; at least one QoS control entry, for performing QoS control; a traffic-control control entry, for performing traffic control; and a parental-control control entry, for performing parental control. More particularly, the QoS control entry may include a plurality of QoS control entries for performing various levels of QoS controls, respectively. In an embodiment, the plurality of QoS control entries may include a high level quality of service (QoS-High) control entry and a low level quality of service (QoS-Low) control entry. This is for illustrative purposes, and not meant to be a limitation of the present invention. In other embodiments, the plurality of QoS control entries may include three or more QoS control entries. For example, in addition to the QoS-High control entry and the QoS-Low control entry, the plurality of QoS control entries may further include a medium level quality of service (QoS-Medium) control entry. In another example, in addition to the QoS-High control entry, the QoS-Medium control entry and the QoS-Low control entry, the plurality of QoS control entries may further include at least one QoS control entry with a level different from the levels of the above qualities of services.

According to some embodiments, the user interface control module 112 may label at least one predetermined video object within a plurality of predetermined video objects on the icon in the drag-and-drop UI. That is, one of the predetermined video objects may be labeled on the icon, so as to indicate that the control entry has been applied to the electronic device. In one embodiment, the plurality of predetermined video objects may be related to the plurality of control entries. More specifically, one of the control entries may be related to one or more predetermined video objects, and one of the predetermined video objects corresponds to at least one control entry.

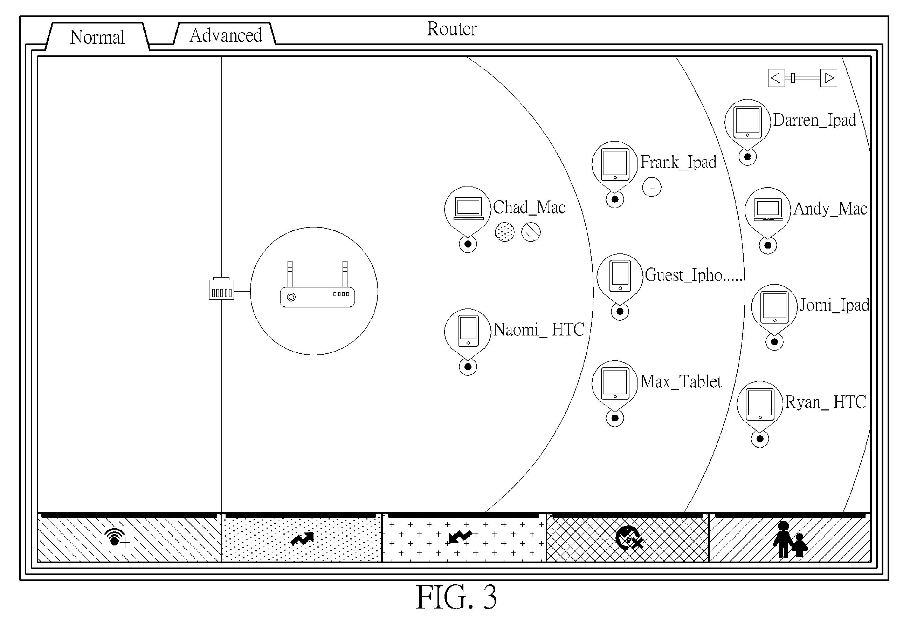

Fig. 3 is a diagram illustrating a control scheme associated with the method 200 shown in Fig. 2 according to an embodiment of the present invention. As shown in Fig. 3, the drag-and-drop UI may include a device map arranged to indicate whether the distances between the plurality of devices and the router are small or large, in which the device map may be installed in one of the tabs of the management window of the router (i.e. the portion marked with "Router" in Fig. 3 for indicating that the management window is used to manage settings and operations of the router). Examples of the tabs may include (but are not limited to): "Normal" and "Advanced". According to this embodiment, the device map may be installed in the tab "normal".

According to this embodiment, the plurality of devices may include multiple wireless devices, such as laptop computers, tablets and smart phones. Further, at least one portion of multiple concentric circles may be depicted in the device map for the user to check whether the distances between the plurality of devices and the router are small or large, in which the center of the concentric circles may be an example of the reference point, and the pattern depicted at the center of the concentric circles may represent the router. The devices marked with the icons "Chad_Mac," "Naomi_HTC," "Frank_Ipad," "Guest_Iphone," "Max_Tablet," "Darren_Ipad," "Andy_NB," "Jomi_Ipad," "Ryan_HTC" may be examples of the plurality of icons mentioned in Step 210. For example, the devices marked with icons "Chad_Mac" and "Andy_NB" are laptop computers of the user Chad and Andy, respectively. In another example, the devices marked with icons "Frank_Ipad," "Max_Tablet," "Darren_Ipad," "Jomi_Ipad" and "Ryan_HTC" are tablets of the users "Frank," "Max," "Darren," "Jomi" and "Ryan", respectively. In another example, the devices marked with icons "Naomi_HTC" and "Guest_Iphone" are smart phones of the users "Naomi" and "Guest", respectively. Note that the scaling factor of the device map may be adjusted by operating the scaling object located at the top right corner. Based on the current settings of the scaling ratio, some icons of the plurality of icons may not appear in the visible area of the device map.

A row region is shown in the lower part of Fig. 3. The row region includes a plurality of rectangular or square regions which can be an example of the plurality of predetermined regions. The symbols in the rectangular regions represent the beamforming control entry, the QoS-High control entry, the QoS-Low control entry, the traffic-control control entry, and the parental-control control entry, respectively. For example, the traffic-control control entry in this embodiment may be a network access forbidden control entry. Some features in this embodiment similar to those in the previous embodiments/modifications are omitted here for brevity.

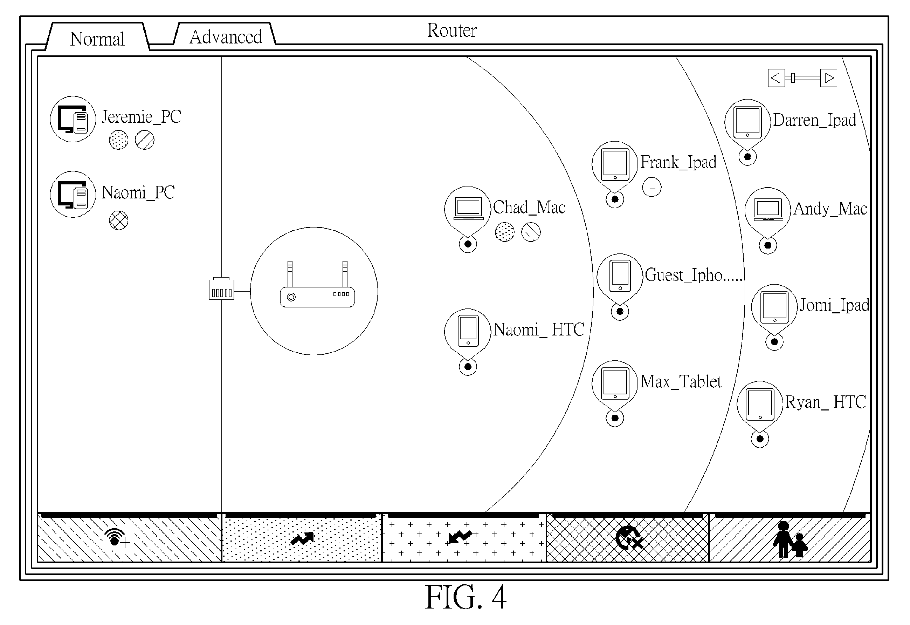

Fig. 4 is a diagram illustrating a control scheme associated with the method 200 shown in Fig. 2 according to another embodiment of the present invention. In this embodiment, except for the wireless devices shown in the embodiment of Fig. 3, the plurality of devices may include a plurality of wired devices, such as personal computers (PCs). As shown in Fig. 4, the icons representing the wired devices may be shown in one side of the device map (e.g. the left side in this embodiment), such as the icons of the devices named "Jeremie_PC" and "Naomi_PC". This may be an example of the plurality of icons mentioned in Step 210. For example, the devices "Jeremie_PC" and "Naomi_PC" may be personal computers of the users "Jeremie" and "Naomi", respectively. Some features in this embodiment similar to those in the previous embodiments/modifications are omitted here for brevity.

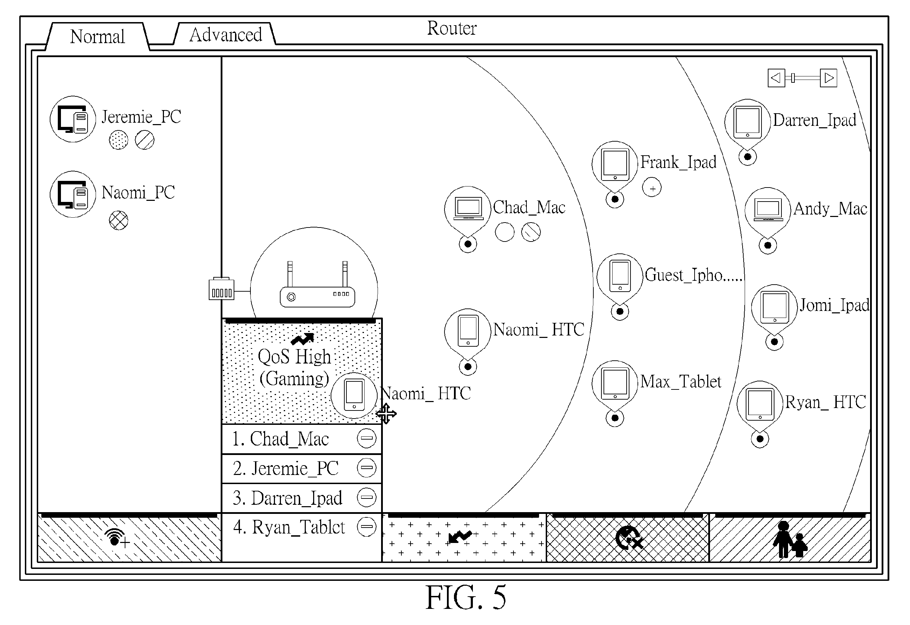

Fig. 5 is a diagram illustrating a scene of the embodiment of Fig. 4 when a drag-and-drop operation is not yet finished. For example, the user of the router (such as the administrator of the system to which the router belongs) may drag and drop the apparatus with the icon "Naomi_HTC" to a predetermined region corresponding to the QoS-High control entry, in which the apparatus with the icon "Naomi_HTC" may be an example of the icon, the predetermined region corresponding to the QoS-High control entry may be an example of the predetermined region, and the QoS-High control entry may be an example of the control entry.

As shown in Fig. 5, during the drag-and-drop operation, when the user of the router has dragged the icon to the predetermined region but has not yet dropped the icon, the user interface control module 112 may control the drag-and-drop UI to unfold the QoS-High control entry in order to show the detailed contents of the QoS-High control entry, such as the "QoS High" mode (which represents high quality of service), recommended application "Gaming", and a list of electronic devices which have applied the QoS High mode. For example, the list in this embodiment includes devices named "Chad_Mac," "Jeremie_PC," "Darren_Ipad" and "Ryan_Tablet" may represent the laptop computer of the user Chad, the PC of the user Jeremie, the tablet of the user Darren and the tablet of the user Ryan, respectively. The symbols "-" adjacent to those user names may be arranged to remove a corresponding electronic device from the list, respectively. Based on the current settings of the scaling ratio, the icon of Ryan's tablet is not shown in the visible area of the device map. Note that the user interface control module 112 has marked one or more little circles directly below the names of some icons, such as the icons named "Chad_Mac," "Frank_Ipad," "Jeremie_PC," "Naomi_PC", in which the little circles may be examples of the predetermined video object.

Under the control of the user interface control module 112, the color and pattern of the first circles of the icons named "Chad_Mac" and "Jeremie_PC" may be configured to be identical to the color and pattern of the predetermined region of the QoS-High control entry (e.g. the color may be green), in order to indicate that the QoS-High control entry has been applied to the electronic devices named "Chad_Mac" and "Jeremie_PC". In another example, under the control of the user interface control module 112, the color and pattern of the second circle of the icon named "Chad_Mac" may be configured to be identical to the color and pattern of the predetermined region of the beamforming control entry (e.g. the color may be blue), in order to indicate that the beamforming control entry has been applied to the electronic device named "Chad_Mac". In another example, under the control of the user interface control module 112, the color and pattern of the circle directly below the icon name "Frank_Ipad" may be configured to be identical to the color and pattern of the predetermined region of the QoS-Low control entry (e.g. the color may be orange), in order to indicate that the QoS-Low control entry has been applied to the electronic device named "Frank_Ipad". In another example, under the control of the user interface control module 112, the color and pattern of the circle directly below the icon name "Jeremie_PC" may be configured to be identical to the color and pattern of the predetermined region of the parental-control control entry (e.g. the color may be yellow), in order to indicate that the parental-control control entry has been applied to the electronic device named "Jeremie_PC". In another example, under the control of the user interface control module 112, the color and pattern of the circle directly below the icon name "Naomi_PC" may be configured to be identical to the color and pattern of the predetermined region of the network access forbidden control entry (e.g. the color may be red), in order to indicate that the network access forbidden control entry has been applied to the electronic device named "Naomi_PC".

After the user of the router finishes the drag-and-drop operation (e.g. the user has released the icon), the user interface control module 112 may add the device name "Naomi_HTC" corresponding to this icon to the list. Some features in this embodiment similar to those in the previous embodiments/modifications are omitted here for brevity.

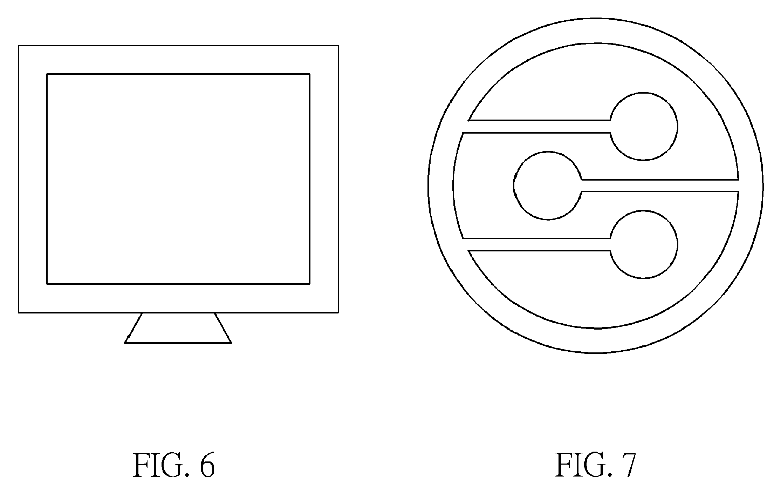

In the embodiment of Fig. 4, the icons representing a laptop computer, tablet, smart phone and PC (such as the icons named "Chad_Mac," "Frank_Ipad," "Naomi_HTC" and "Jeremie _PC") may be an example of the icons mentioned in Step 210. This is for illustrative purposes, and not meant to be a limitation of the present invention. In some embodiments (such as the embodiments shown in Figs. 6-10), both the shapes and patterns of the icons can be modified.

Fig. 6 is a diagram illustrating an icon associated with the method 200 shown in Fig. 2 according to an embodiment of the present invention, in which the icon may be arranged to represent a smart television (or Smart TV). The icon shown in Fig. 6 may be an example of any of the icons mentioned above.

Fig. 7 is a diagram illustrating an icon associated with the method 200 shown in Fig. 2 according to another embodiment of the present invention, in which this icon may represent a Digital Living Network Alliance Device (or DLNA) device. The icon shown in Fig. 7 may be an example of any of the icons mentioned above.

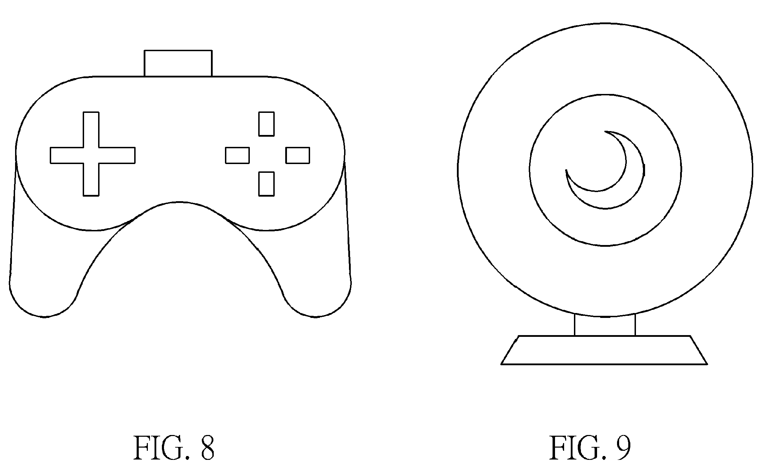

Fig. 8 is a diagram illustrating an icon associated with the method 200 shown in Fig. 2 according to another embodiment of the present invention, in which this icon may represent a gaming console. The icon shown in Fig. 8 may be an example of any of the icons mentioned above.

Fig. 9 is a diagram illustrating an icon associated with the method 200 shown in Fig. 2 according to another embodiment of the present invention, in which this icon may represent an internet protocol (or IP) camera or a network camera. The icon shown in Fig. 9 may be an example of any of the icons mentioned above.

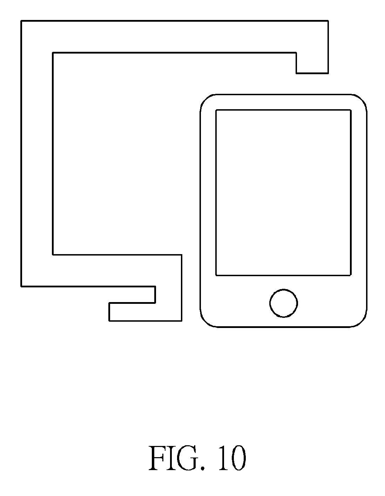

Fig. 10 is a diagram illustrating an icon associated with the method 200 shown in Fig. 2 according to another embodiment of the present invention, in which this icon may represent a miscellaneous device, and more particularly, may represent various apparatus other than those mentioned in the embodiments of Fig. 3 to Fig. 10. The icon shown in Fig. 10 icon may be an example of any of the aforementioned icons.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method (200) for applying device management rules in a router, **characterized by**:
providing a drag-and-drop user interface for a user of the router, and outputting display data of a plurality of icons respectively with respect to a plurality of electronic devices, for displaying the plurality of icons on the drag-and-drop user interface to allow the user to drag and drop at least one icon of the plurality of icons, wherein the plurality of electronic devices are connected wirelessly or in a wired manner to the router; and
according to user inputs obtained via the drag-and-drop user interface, applying at least one device management rule of the device management rules to at least one electronic device within the plurality of electronic devices, wherein the icon corresponds to the electronic device.

2. The method (200) of claim 1, **characterized in that** the step of outputting display data of the plurality of icons respectively with respect to the plurality of electronic devices for displaying the plurality of icons on the drag-and-drop user interface further comprises:
according to wireless signals of the plurality of electronic devices, determining distances between the plurality of electronic devices and the router, respectively, to generate display location information of each of the plurality of icons, wherein the display location information of the plurality of icons is related to the distances; and
according to the display location information of the plurality of icons, controlling displayed locations of the plurality of icons in the drag-and-drop user interface, respectively.

3. The method (200) of claim 2, **characterized in that** the plurality of electronic devices comprises a first electronic device and a second electronic device, and a first distance between the first electronic device and the router is smaller than a second distance between the second electronic device and the router; the plurality of icons comprises a first icon with respect to the first electronic device and a second icon with respect to the second electronic device; and the step of outputting display data of the plurality of icons respectively with respect to the plurality of electronic devices for displaying the plurality of icons on the drag-and-drop user interface further comprises:
controlling locations of the first icon and the second icon with respect to a reference point in the drag-and-drop user interface, to make a distance between the first icon and the reference point be smaller than a distance between the second icon and the reference point, in order to indicate that the first distance is smaller than the second distance, wherein the reference point in the drag-and-drop user interface is arranged to represent a location of the router.

4. The method (200) of claim 1, **characterized in that** the drag-and-drop user interface comprises a plurality of predetermined regions respectively with respect to a plurality of control entries, and the plurality of predetermined regions are arranged to trigger the plurality of control entries, respectively; and the step of applying at least one device management rule of the device management rules to at least one electronic device within the plurality of electronic devices further comprises:
when the user inputs indicate that the user drags and drops the icon to at least one predetermined region within the plurality of predetermined regions, triggering at least one control entry within the plurality of control entries to apply the device management rule to the electronic device, wherein the predetermined region is related to the control entry.

5. The method (200) of claim 4, **characterized in that** the method (200) further comprises:
in the drag-and-drop user interface, labeling at least one predetermined video object within a plurality of predetermined video objects on the icon, to indicate that the control entry is applied to the electronic device, wherein the plurality of predetermined video objects are related to the plurality of control entries, and the predetermined video object corresponds to the control entry.

6. An apparatus (100) for applying device management rules in a router, the apparatus (100) comprising at least one portion of the router, the apparatus (100) **characterized by**:
a control circuit (110), arranged to control operations of the router, wherein the control circuit (110) comprises:
a user interface control module (112), arranged to provide a drag-and-drop user interface for a user of the router, and output display data of a plurality of icons respectively with respect to a plurality of electronic devices, for displaying the plurality of icons on the drag-and-drop user interface to allow the user to drag and drop at least one icon of the plurality of icons, wherein the plurality of electronic devices are connected wirelessly or in a wired manner to the router; and
a setting module (114), arranged to apply at least one device management rule of the device management rules to at least one electronic device within the plurality of electronic devices according to user inputs obtained via the drag-and-drop user interface, wherein the icon corresponds to the electronic device.

7. The apparatus (100) of claim 6, **characterized in that** according to wireless signals of the plurality of electronic devices, the user interface control module (112) determines distances between the plurality of electronic devices and the router, respectively, to generate display location information of each of the plurality of icons, wherein the display location information of the plurality of icons is related to the distances; and
according to the display location information of the plurality of icons, the user interface control module (112) controls displayed locations of the plurality of icons in the drag-and-drop user interface, respectively.

8. The apparatus (100) of claim 7, **characterized in that** the plurality of electronic devices comprises a first electronic device and a second electronic device, and a first distance between the first electronic device and the router is smaller than a second distance between the second electronic device and the router; the plurality of icons comprises a first icon with respect to the first electronic device and a second icon with respect to the second electronic device; and the user interface control module (112) controls locations of the first icon and the second icon with respect to a reference point in the drag-and-drop user interface, to make a distance between the first icon and the reference point be smaller than a distance between the second icon and the reference point to indicate that the first distance is smaller than the second distance, wherein in the drag-and-drop user interface, the reference point is arranged to represent a location of the router.

9. The apparatus (100) of claim 6, **characterized in that** the drag-and-drop user interface comprises a plurality of predetermined regions respectively with respect to a plurality of control entries, and the plurality of predetermined regions are arranged to trigger the plurality of control entries, respectively; and when the user inputs indicate that the user drags and drops the icon to at least one predetermined region within the plurality of predetermined regions, the setting module (114) triggers at least one control entry within the plurality of control entries to apply the device management rule to the electronic device, wherein the predetermined region is related to the control entry.

10. The apparatus (100) of claim 9, **characterized in that** in the drag-and-drop user interface, the user interface control module (112) labels at least one predetermined video object within a plurality of predetermined video objects on the icon, to indicate that the control entry is applied to the electronic device, wherein the plurality of predetermined video objects are related to the plurality of control entries, respectively, and the predetermined video object corresponds to the control entry.

11. The apparatus (100) of claim 6, **characterized in that** the apparatus (100) further comprises:
a storage unit (120), coupled to the control circuit (110), arranged to store configuration information of the router, wherein the setting module (114) applies the device management rule to the electronic device via updating the configuration information.

12. The method (200) of claim 4 or the apparatus (100) of claim 9, **characterized in that** the plurality of control entries comprises a beamforming control entry for performing beamforming control.

13. The method (200) of claim 4 or the apparatus (100) of claim 9, **characterized in that** the plurality of control entries comprises at least one quality of service, hereinafter QoS, control entry for performing QoS control.

14. The method (200) of claim 4 or the apparatus (100) of claim 9, **characterized in that** the plurality of control entries comprises a traffic-control control entry for performing traffic control.

15. The method (200) of claim 4 or the apparatus (100) of claim 9, **characterized in that** the plurality of control entries comprises a parental-control control entry for performing parental control.
